# FASCICULE DE BREVET EUROPEEN

(11) **EP 2 324 264 B1**
(45) Date de publication et mention de la délivrance du brevet: **21.05.2014**
(21) Numéro de dépôt: 09784453.4
(22) Date de dépôt: 30.06.2009
(51) Int. Cl.: F16F 1/38, F16F 9/54

(54) **STRUCTURE DE VEHICULE AUTOMOBILE COMPORTANT UNE ARTICULATION ELASTIQUE**
KRAFTFAHRZEUGSTRUKTUR MIT EINEM ELASTISCHEN SCHARNIER
AUTOMOBILE STRUCTURE COMPRISING AN ELASTIC HINGE

(30) Priorité: 10.09.2008 FR 0804974
(43) Date de publication de la demande: 25.05.2011
(73) Titulaire: Renault S.A.S., 92100 Boulogne-Billancourt (FR)
(72) Inventeur: MASI, Vincent, F-75020 PARIS (FR); THOMAS, Frédéric, F-78000 VERSAILLES (FR); VERDIER, Yann, F-78200 MANTES-LA-JOLIE (FR)
(86) Numéro de dépôt international: PCT/FR2009/051270
(87) Numéro de publication internationale: WO 2010/029236

(56) Documents cités:
- EP-A- 1 219 853
- US-A- 1 992 631
- US-A- 2 749 160
- US-A- 2 852 287

## Description

La présente invention concerne une structure de véhicule automobile sur laquelle est montée une articulation élastique pour une pièce de suspension de véhicule automobile, telle que, par exemple, un amortisseur.

Les articulations des amortisseurs comportent, de manière classique, un manchon intérieur et un manchon extérieur, cylindriques et de même axe, entre lesquels est intercalé et fixé un manchon en matière élastique, de même axe que les deux autres manchons. L'articulation sert à relier l'amortisseur à la structure du véhicule. Le manchon extérieur est, en général, plus court que le manchon intérieur. Le manchon intérieur est fixé à une portion de la structure d'un véhicule automobile, au moyen d'une vis et d'un écrou. La structure présente, pour ce faire, une portion de fixation dans laquelle est ménagé un trou. Une vis est insérée dans ce trou et dans le passage du manchon intérieur. Un écrou, qui est vissé à l'extrémité libre de la vis, permet de maintenir, par serrage, l'articulation sur la portion de fixation de la structure.

Le montage de l'articulation est long et fastidieux car la manoeuvre de vissage de l'écrou est, notamment, effectuée en aveugle.

Par ailleurs, dans ce type de montage dit « en porte à faux », le manchon risque de glisser le long de la vis ou de bouger selon des directions perpendiculaires à cette dernière (cisaillement).

Le document EP 1 188 948 décrit une articulation d'amortisseur de véhicule automobile telle que précitée, dont le manchon intérieur se prolonge par une tige de fixation, filetée, qui s'étend axialement au-delà du manchon extérieur et du manchon en matière élastique. Cette projection de fixation est insérée dans le trou ménagé dans la portion de fixation. Un écrou vissé sur l'extrémité libre de cette projection permet de maintenir l'articulation sur la structure, par serrage. La projection de fixation remplace la vis, ce qui facilite le montage, ne serait-ce que par la diminution du nombre des éléments de serrage rapportés. De plus, la projection facilite également le montage en indiquant à l'opérateur le sens de montage de l'articulation.

Les articulations d'amortisseur peuvent également être montées en chape, c'est-à-dire que le manchon intérieur est comprimé, selon sa longueur, entre les deux ailes d'une chape de montage.

Un but de la présente invention est de proposer une articulation d'amortisseur de véhicule automobile qui permet un montage simple et sûr.

Le document US 1,992,631 A montre une structure de véhicule automobile selon le préambule de la revendication 1.

La présente invention, telle que définie par la revendication 1, concerne une structure de véhicule automobile comportant une portion de fixation sur laquelle est montée une articulation d'amortisseur élastique comportant un manchon intérieur recouvert d'un manchon en matière élastique, ledit manchon intérieur étant fixé à ladite portion de fixation par l'intermédiaire de moyens de serrage qui comportent un élément de fixation qui traverse ledit manchon intérieur.

Selon l'invention, d'une part, ladite portion de fixation comporte une douille qui présente une extrémité solidaire de ladite portion de fixation et une extrémité libre où débouche un passage longitudinal qui est traversé par ledit élément de fixation et, d'autre part, une desdites extrémités dudit manchon intérieur coopère par emboîtement conique avec ladite extrémité libre de ladite douille.

Selon un premier mode de réalisation, au moins une desdites extrémités dudit manchon intérieur forme un tronc de cône sortant qui prolonge longitudinalement ledit manchon intérieur.

Selon un second mode de réalisation, ledit manchon intérieur présentant une paroi cylindrique, un tronc de cône rentrant est ménagé dans l'épaisseur de ladite paroi au niveau d'au moins une desdites extrémités dudit manchon intérieur.

Avantageusement, ledit manchon intérieur présentant un axe longitudinal, ledit tronc de cône présente un sommet situé sur ledit axe longitudinal.

Avantageusement, notamment dans le cas du second mode de réalisation, ledit manchon intérieur présente au moins au niveau de ladite extrémité qui coopère par emboîtement conique avec ladite douille, une surface plane qui s'étend radialement autour de ladite extrémité, moyennant quoi ladite articulation peut être montée entre les ailes d'une chape de montage ou en appui contre une rondelle.

D'autres particularités et avantages de l'invention ressortiront à la lecture de la description faite ci-après de deux modes de réalisation particuliers de l'invention, donnés à titre indicatif mais non limitatif, en référence aux dessins annexés sur lesquels :
- la Figure 1 représente une vue en coupe longitudinale, selon l'axe du manchon intérieur, d'un premier mode de réalisation de l'invention ;
- la Figure 2 représente une vue en coupe longitudinale, selon l'axe du manchon intérieur, d'un second mode de réalisation de l'invention ; et
- la Figure 3 représente à titre d'exemple une vue en coupe longitudinale, selon l'axe du manchon intérieur, de l'articulation de la figure 2, montée en chape.

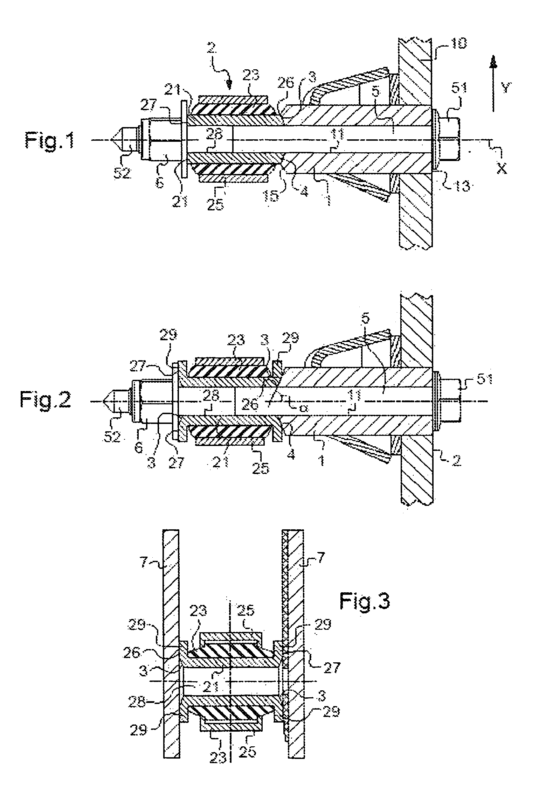

La Figure 1 illustre une articulation montée en porte-à-faux selon l'invention. Une douille de montage 1 est fixée (soudée ou autre) sur une portion de fixation de la structure d'un véhicule automobile. Dans le cas présent, la douille 1 est solidaire de la face longitudinale interne d'un longeron 10. La douille de montage 1 présente un passage longitudinal 11 qui s'étend entre une première extrémité 13, solidaire de la structure, et une seconde extrémité 15 qui est libre. Le passage longitudinal 11 est débouchant au niveau des deux extrémités 13 et 15. Le passage 11 est ainsi accessible depuis la face arrière de la portion de fixation, c'est-à-dire la face de la portion de fixation qui n'est pas située du même côté que l'extrémité libre 15 de la douille 1.

Comme représenté sur la figure 1, l'articulation 2 comporte un manchon intérieur 21, recouvert d'un manchon en matière élastique 23, qui est lui-même recouvert d'un manchon extérieur 25. Les trois manchons 21, 23 et 25 sont de même axe longitudinal X. Le manchon intérieur 21 présente deux extrémités 26 et 27 qui dépassent au-delà du manchon en matière élastique 23 et au-delà du manchon extérieur 25, selon l'axe longitudinal X. Le manchon extérieur 25 est le plus court des trois manchons. Le manchon intérieur 21 définit un passage longitudinal 28, qui s'étend selon l'axe X, entre les deux extrémités 26 et 27 et qui débouche au niveau de ces dernières. Ce passage 28 présente le même axe longitudinal X que le manchon intérieur 21. L'extrémité 26 forme un tronc de cône 3. Ce tronc de cône 3 est un tronc de cône de révolution qui s'étend selon l'axe X et comporte un sommet (non représenté) situé sur l'axe X. Le tronc de cône 3 est sortant et prolonge donc le manchon intérieur 21 selon l'axe X. Ce tronc de cône 3 est emboîté dans un tronc de cône rentrant 4, ménagé à l'extrémité libre 15 de la douille 1. Les longueurs respectives du tronc de cône 3 et du tronc de cône 4 sont telles que les deux troncs de cône 3 et 4 peuvent être emboîtés l'un dans l'autre sans jeu, par déplacement de l'articulation vers la douille 1, selon la direction de l'axe X.

Un élément de fixation 5, du type boulon est inséré dans le passage longitudinal 11 de la douille 1 et dans le passage 28 du manchon intérieur 21 qui prolonge le passage longitudinal 11 de la douille 1. Cet élément de fixation 5, du type vis, par exemple, présente une tête 51, qui vient en butée contre la face arrière de la portion de fixation de la structure de véhicule automobile, au niveau de la section de la première extrémité 13 de la douille 1. Cet élément de fixation 5 présente, également, une extrémité libre filetée 52, qui dépasse hors du manchon intérieur 21, et sur laquelle est montée une rondelle et vissé un écrou 6.

Le montage de ce premier mode de réalisation va maintenant être décrit en référence à la figure 1. L'opérateur saisit l'articulation 2. La présence d'une extrémité en tronc de cône lui indique le sens de montage de l'articulation. Il emboîte le tronc de cône 3 du manchon intérieur 21 dans le tronc de cône rentrant 4 de la douille 1. En faisant tourner le tronc de cône 3 dans le tronc de cône 4 et en enfonçant le tronc de cône 3 dans le tronc de cône 4, l'opérateur parvient à emboîter les deux troncs de cône 3 et 4, l'un dans l'autre, sans jeu. Il insère ensuite l'élément de fixation 5 dans le passage unique formé par le passage 28 du manchon intérieur 21 qui est prolongé par le passage 11 de la douille 1. La tête 51 est mise en appui contre la face arrière de la portion de fixation de la structure, au niveau de la première extrémité 13 de la douille 1. Une rondelle est disposée contre l'extrémité libre du manchon intérieur 21 et un écrou 6 est vissé contre la rondelle, sur l'extrémité libre 52 de l'élément de fixation 5. Le vissage de l'écrou 6 permet de maintenir, par serrage, l'articulation 2 sur la douille 1 et d'empêcher toute translation relative du manchon intérieur 21 et de la douille 1 selon l'axe X. L'emboîtement conique empêche la translation selon les directions perpendiculaires à X. La rotation du tronc de cône 3 dans le tronc de cône 4 est empêchée par adhérence des deux surfaces emboîtées, l'adhérence étant renforcée par le serrage de l'écrou 6 et du boulon 5.

On obtient ainsi un montage facile et particulièrement sûr de l'articulation sur la douille. Le cône sortant indique le sens de montage à l'utilisateur.

Lorsque les deux extrémités du manchon intérieur 21 comportent des troncs de cône sortant, le montage est aisé car le manchon est parfaitement symétrique et donc peut être monté indifféremment dans les deux sens sur la douille 1.

Comme représenté sur la figure 2, dans un second mode de réalisation dont les éléments en commun avec le premier mode de réalisation décrit ci-dessus sont référencés à l'identique, le tronc de cône 3 est rentrant. Les deux extrémités 26 et 27 du manchon intérieur 21 présentent chacune un tronc de cône 3 de révolution rentrant. Le tronc de cône 3 est ménagé dans l'épaisseur de la paroi cylindrique qui forme le manchon intérieur 21. La longueur du tronc de cône 3 est adaptée pour obtenir, comme dans le cas du premier mode de réalisation, un emboîtement ajusté, sans jeu, des deux troncs de cône 3 et 4 de façon à empêcher toute translation du manchon intérieur 21 selon une direction perpendiculaire à l'axe X. Le tronc de cône 3 présente une section maximale au niveau des extrémités 26 et 27 du manchon intérieur 21. La section du tronc de cône 3 diminue en allant vers l'intérieur du manchon intérieur 21. Le tronc de cône 3 présente un sommet situé sur l'axe X. Une surface plane, portée par une collerette 29, circulaire et radiale, équipe le bord externe circulaire de chacune des extrémités 26 et 27 du manchon intérieur 21. Cette collerette 29 est sensiblement perpendiculaire à l'axe X.

Le montage de ce second mode de réalisation est le même que celui décrit en référence au premier mode de réalisation.

Ce second mode de réalisation présente l'avantage de pouvoir également être monté en chape, comme illustré sur la figure 3 et dans les deux sens. La structure montrée par la figure 3 ne fait pas partie de l'invention telle que définie par la revendication 1.

Sur la figure 3, l'articulation 2 de la figure 2 est montée en chape entre les ailes 7 d'une chape de montage. Les ailes 7 sont parallèles entre elles et perpendiculaires à l'axe X. Les deux extrémités 26 et 27 du manchon intérieur 21 sont en appui, chacune contre une aile 7 de manière à ce que le manchon intérieur 21 soit comprimé, selon sa longueur, entre les ailes 7. La présence des troncs de cône rentrants 3 ne gène en rien ce montage en chape. Les collerettes 29 permettent d'avoir une surface de contact assez grande entre les extrémités 26 et 27 du manchon intérieur 21 et la surface des ailes 7. En effet, la présence des troncs de cône 3 réduit la surface de la section de la pièce formant le manchon intérieur 21. Cette réduction de surface d'appui est compensée par les collerettes 29 qui peuvent même former une surface d'appui beaucoup plus grande, à épaisseur de pièce égale, que celle qui aurait pu être obtenue avec la seule section du manchon 21. Ces collerettes 29 peuvent comporter des nervures circulaires concentriques qui évitent le glissement entre les ailes 7 de la chape, comme décrit dans le document FR 2 715 702.

Selon une variante non représentée du premier mode de réalisation, le ou les cônes sortant 3 présentent au niveau de leur extrémité libre une surface plane qui s'étend autour de l'ouverture formée par la section du passage ménagé dans le manchon intérieur 21. Lorsque les deux extrémités 26 et 27 du manchon intérieur 21 comportent chacune un cône sortant 3 dont l'épaisseur forme une telle surface plane, le manchon interne 21 peut alors également être monté entre les ailes d'une chape de montage.

Selon une variante non représentée du second mode de réalisation, la surface plane est ménagée au niveau de l'épaisseur du manchon intérieur 21. Dans ce cas, il n'y a pas de portion dépassant radialement de la section du manchon intérieur 21, la collerette 29 est intégrée au manchon intérieur 21.

On désigne par α l'angle formé, en coupe longitudinale, entre l'axe X et la paroi interne du tronc de cône 3 du second mode de réalisation (voir figure 2). La valeur de α est choisie par l'Homme du Métier en fonction des matériaux constitutifs du manchon intérieur 21 et de la douille 1. L'Homme du Métier peut ainsi évaluer un coefficient de frottement entre ces deux pièces. L'angle α est, de préférence, choisi de manière à ce qu'il n'y est ni coincement entre la douille 1 et le manchon intérieur 21, ni matage de la douille 1 et/ou du manchon intérieur 21, sous l'effet de la pression exercée par les moyens de serrage. L'articulation 2 peut alors être facilement démontée de la douille 1. La valeur de α doit être suffisamment élevée pour éviter le coincement mais suffisamment faible pour bien limiter les forces de cisaillement (glissement) perpendiculaires à X.

## Revendications

1. Structure de véhicule automobile comportant une portion de fixation sur laquelle est montée une articulation d'amortisseur élastique comportant un manchon intérieur (21), recouvert d'un manchon en matière élastique (23), ledit manchon intérieur (21) étant fixé à ladite portion de fixation par l'intermédiaire de moyens de serrage qui comportent un élément de fixation (5) qui traverse ledit manchon intérieur (21), **caractérisée en ce que** ladite portion de fixation comporte une douille (1) qui présente une extrémité (13), solidaire de ladite portion de fixation, et une extrémité libre (15), où débouche un passage longitudinal (11) qui est traversé par ledit élément de fixation (5), et **en ce qu'**une desdites extrémités (26 ; 27) dudit manchon intérieur (21) coopère par emboîtement conique avec ladite extrémité libre (15) de ladite douille (1).

2. Structure selon la revendication 61, **caractérisée en ce qu'**au moins une desdites extrémités (26 ; 27) dudit manchon intérieur (21) forme un tronc de cône sortant qui prolonge longitudinalement ledit manchon intérieur (21).

3. Structure selon la revendication 1, **caractérisée en ce que** ledit manchon intérieur (21) présentant une paroi cylindrique, un tronc de cône rentrant (3) est ménagé dans l'épaisseur de ladite paroi au niveau d'au moins une desdites extrémités (26 ; 27) dudit manchon intérieur (21).

4. Structure selon la revendication 2 ou 3, **caractérisée en ce que** ledit manchon intérieur (21) présentant un axe longitudinal (X), ledit tronc de cône (3) présente un sommet situé sur ledit axe longitudinal (X).

5. Structure selon l'une quelconque des revendications précédentes, **caractérisée en ce que** ledit manchon intérieur (21) présente au moins au niveau de ladite extrémité (26 ; 27) qui coopère par emboîtement conique avec ladite douille (1), une surface plane (29) qui s'étend radialement autour de ladite extrémité (26 ; 27), moyennant quoi ladite articulation peut également être montée entre les ailes (7) d'une chape de montage ou en appui contre une rondelle.

## Patentansprüche

1. Kraftfahrzeugstruktur, umfassend einen Befestigungsabschnitt, an dem ein elastisches Gelenk für einen Stoßdämpfer montiert ist, das eine innere Muffe (21) umfasst, die mit einer Muffe (23) aus elastischem Material überzogen ist, wobei die innere Muffe (21) über Festziehmittel an dem Befestigungsabschnitt befestigt ist, die ein Befestigungselement (5) umfassen, das durch die innere Muffe (21) hindurchgeht, **dadurch gekennzeichnet, dass** der Befestigungsabschnitt eine Hülse (1) umfasst, die ein fest mit dem Befestigungsabschnitt verbundenes Ende (13) und ein freies Ende (15) aufweist, an dem ein Längsdurchgang (11) mündet, durch den das Befestigungselement (5) hindurchgeht, und dass eines der Enden (26; 27) der inneren Muffe (21) durch konisches Ineinanderschieben mit dem freien Ende (15) der Hülse (1) zusammenwirkt.

2. Struktur nach Anspruch 1, **dadurch gekennzeichnet, dass** mindestens eines der Enden (26; 27) der inneren Muffe (21) einen ausspringenden Kegelstumpf bildet, der die innere Muffe (21) in Längsrichtung verlängert.

3. Struktur nach Anspruch 1, **dadurch gekennzeichnet, dass** bei der inneren Muffe (21), die eine zylindrische Wand aufweist, ein rückspringender Kegelstumpf (3) in der Dicke der Wand auf der Höhe von mindestens einem der Enden (26; 27) der inneren Muffe (21) vorgesehen ist.

4. Struktur nach Anspruch 2 oder 3, **dadurch gekennzeichnet, dass** bei der inneren Muffe (21), die eine Längsachse (X) aufweist, der Kegelstumpf (3) einen auf der Längsachse (X) liegenden Scheitel aufweist.

5. Struktur nach einem der vorhergehenden Ansprüche, **dadurch gekennzeichnet, dass** die innere Muffe (21) mindestens auf der Höhe des Endes (26; 27), das über konisches Ineinanderschieben mit der Hülse (1) zusammenwirkt, eine ebene Fläche (29) aufweist, die sich radial um das Ende (26; 27) erstreckt, wodurch das Gelenk auch zwischen den Schenkeln (7) eines Gabelbügels oder an einer Unterlegscheibe anliegend montiert sein kann.

## Claims

1. Motor vehicle structure comprising a mounting portion on which is fitted an elastic shock absorber joint comprising an inner sleeve (21), covered with a sleeve (23) made of elastic material, the said inner sleeve (21) being mounted on said mounting portion by way of clamping means which comprise a mounting element (5) which passes through the said inner sleeve (21), **characterized in that** the said mounting portion comprises a bushing (1) which has one end (13) secured to the said mounting portion, and a free end (15), where a longitudinal passage (11) opens out, the said mounting element (5) passing through the said longitudinal passage (11), and **in that** one of the said ends (26; 27) of the said inner sleeve (21) engages by conical interlocking with the said free end (15) of the said bushing (1).

2. Structure according to Claim 1, **characterized in that** at least one of the said ends (26; 27) of the said inner sleeve (21) forms a protruding conical frustum which longitudinally extends the said inner sleeve (21).

3. Structure according to Claim 1, **characterized in that**, with the said inner sleeve (21) having a cylindrical wall, a re-entrant conical frustum (3) is formed in the thickness of the said wall at at least one of the said ends (26; 27) of the said inner sleeve (21).

4. Structure according to Claim 2 or 3, **characterized in that**, with the said inner sleeve (21) having a longitudinal axis (X), the said conical frustum (3) has a top located on the said longitudinal axis (X).

5. Structure according to any one of the preceding claims, **characterized in that** the said inner sleeve (21) has, at least at the said end (26; 27) which engages by conical interlocking with the said bushing (1), a planar surface (29) which extends radially around the said end (26; 27), such that the said joint can also be fitted between the arms (7) of a fitting yoke or in abutment against a washer.
